# EUROPEAN PATENT SPECIFICATION

(11) **EP 2 983 126 B1**
(45) Date of publication and mention of the grant of the patent: **09.05.2018**
(21) Application number: 14179828.0
(22) Date of filing: 05.08.2014
(51) Int. Cl.: G06Q 50/00, H04L 12/58

(54) **Secure friending**
Sicheres Friending
Association sécurisée entre amis

(43) Date of publication of application: 10.02.2016
(73) Proprietor: Rovio Entertainment Ltd, 02150 Espoo (FI)
(72) Inventor: Ronkainen, Sami, FI-02150 ESPOO (FI)
(74) Representative: Boco IP Oy Ab

(56) References cited:
- US-A1- 2009 217 342
- US-A1- 2013 024 516
- US-A1- 2014 082 088
- Linkedin Corporation: "Expiration of Invitations", , 14 January 2014 (2014-01-14), XP055158840, LinkedIn Help Center Retrieved from the Internet: URL:https://help.linkedin.com/app/answers/ detail/a_id/119/~/expiration-of-invitation s [retrieved on 2014-12-16]

## Description

### Technical field

Examples of the present invention relate to associating actors in social networks. More specifically, the examples of the present invention relate to methods, apparatuses and a related computer program products for defining secure association of actors in a social network enabling interaction between desired actors. Examples of the present invention may be applicable to multiparty applications like gaming, messaging etc.

### Background

Several social networks provide means for interaction between. In some social networks the interaction is allowed between any actors, in some social networks the interaction is allowed between registered actors and in some social networks the interaction is allowed only between actors who have specifically accepted the interaction per request.

US patent application 2014/0082088 discloses a method and apparatus for establishing a user relationship in a social networking application. A relationship scenario may be used to automatically establish a user relationship. Alternatively, a positive response to a user verification is requested.

### Summary

Therefore there is a need for an approach for defining a secure procedure to associating actors in a social network.

According to one example embodiment, a method for associating actors in a social network is presented. In the method a first association request message is obtained from a first actor. The first association request message comprising information relating to a first actor and a second actor. The method further comprises waiting for a second association request message from a second actor. The second association request message comprises information relating to the first actor and the second actor. As a response to obtaining the second association request message, associating the first actor with the second actor.

According to another example embodiment, a non-transitory computer-readable medium encoded with instructions that, when executed in hardware, perform a process, the process comprising: obtaining a first association request message from a first actor. The first association request message comprising information relating to a first actor and a second actor. The steps further comprise waiting for a second association request message from a second actor. The second association request message comprises information relating to the first actor and the second actor. As a response to obtaining the second association request message, associating the first actor with the second actor.

According to another example embodiment, a computer program product for associating actors in a social network including one or more sequences of one or more instructions which, when executed by one or more processors, cause an apparatus to at least perform the steps of at least: obtaining a first association request message from a first actor. The first association request message comprising information relating to a first actor and a second actor. The steps further comprise waiting for a second association request message from a second actor. The second association request message comprises information relating to the first actor and the second actor. As a response to obtaining the second association request message, associating the first actor with the second actor.

According to another example embodiment: A server for associating actors in a social network comprising:
- means for obtaining a first association request message from a first actor comprising information relating to a first actor and a second actor;
- means for waiting for a second association request message from a second actor comprising information relating to the first actor and the second actor;
- means for associating the first actor with the second actor as a response to obtaining the second association request message.

According to another example embodiment, an apparatus comprising:
- means for obtaining a first association request message from a first actor comprising information relating to a first actor and a second actor;
- means for waiting for a second association request message from a second actor comprising information relating to the first actor and the second actor;
- means for associating the first actor with the second actor as a response to obtaining the second association request message.

### Brief description of the figures

The embodiments of the invention are illustrated by way of example - not by way of limitation, in the figures of the accompanying drawings:
Figure 1 illustrates an example social network.
Figure 2 illustrates an example method.
Figure 3 illustrates another example method.
Figure 4 illustrates an example server device.
Figure 5 illustrates an example signaling chart.

### Description of some embodiments

The following embodiments are exemplary only. Although the specification may refer to "an", "one", or "some" embodiment(s), this does not necessarily mean that each such reference is to the same embodiment(s), or that the feature only applies to a single embodiment. Single features of different embodiments may be combined to provide further embodiments.

In the following, features of the invention will be described with a simple example of a system architecture in which various embodiments of the invention may be implemented. Only elements relevant for illustrating the embodiments are described in detail. Various implementations of the information system comprise elements that are suitable for the example embodiments and may not be specifically described herein.

Often social networks are open to any actors and identification of a user behind an actor is not required. This approach is flexible to most of the users and helps the social networks to grow but unfortunately there are users abusing the social networks and trying to establish interaction with inappropriate reasons. This is especially serious problem when the social network is targeted to minors or the minors are using the social network.

Examples of a method, a computer readable medium, an apparatus and a computer program product for providing architecture for delivering messages are disclosed.

As used herein, the term "actor" refers to a computational entity capable of having a state and as response to an event, for example a message, is capable of altering the state. An actor may represent for example a user, a group of users, a social chat room, a social game etc.

As used herein, the term "unique identifier" refers to data that is used to authenticate an actor - for example a user. The data can be any data that can be used to individually authenticate the actor. Examples of such data are strings of numbers or letters or symbols or a combination of all previously mentioned.

As used herein, the term "social network" is a structure comprising actors and interaction between at least some of the actors. The social network may be for example a messaging service, a multiplayer game, media sharing service, team working service, a chat room etc. The social network provides a first communication channel, which enable the actors at least to send and receive messages.

As used herein, the term "association request message" refers to an object of communication containing a discrete set of data sent from one actor to another. The message may contain, but is not limited to, for example, a unique identifier identifying a first actor and another unique identifier identifying a second actor, message content, a request for associating the first actor and the second actor and type of the message. The type of the message may be embedded into the message content. The message may be human-readable or non-human-readable and it may be sent between the actors (persons, devices, applications and any combinations thereof). It can be for example a chat message from a user to another user, a game event from an actor to another, information to be delivered from one application to another application etc.

As used herein, the term "server" refers to a physical or virtual computational entity capable of enhancing information and to perform computational tasks. The term server may refer to one entity or a group on entities configured to operate jointly.

As used herein, the term "user device", refers to a computing device and it may be for example a laptop, desktop computer, graphics tablet, cellular phone, multimedia system of a vehicle, an arcade gaming device, an electronic noticeboard, or any other device with capabilities for running an application.

As used herein, the term "first communication channel" refers to messaging platform between actors within the social network. The first communication channel may be used to transfer messages, like chat message, gaming event etc, relating to the social network and also to transferring the associating request messages. The first communication channel may be used in transferring messages between the actors (persons, devices, applications and any combinations thereof).

As used herein, the term "second communication channel" refers to messaging utilising any other communication compared to the first communication channel. The second communication channel may be for example verbal communication face-to-face, a phone call, an e-mail message, an text message etc.

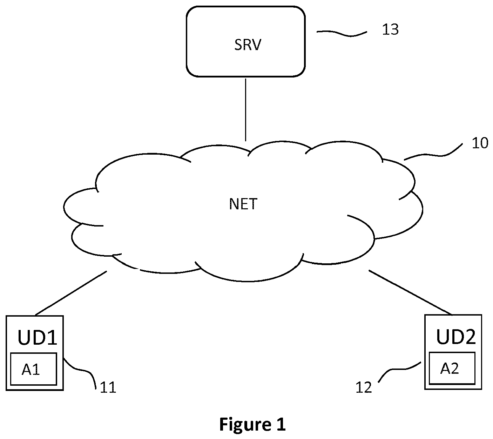

Figure 1 is a diagram of a network system capable of providing architecture for secure association of actors according to at least some example embodiments. The illustrated example network system comprises two user devices 11, 12 (UD1, UD2), a server 13 (SRV) and network 10 (NET). The network 10 represents here any combination of hardware and software components that enables a process in one communication end point to send or receive information to or from another process in another, remote communication endpoint.

The network 10 may be, for example, a personal area network, a local area network, a home network, a storage area network, a campus network, a backbone network, a metropolitan area network, a wide area network, an enterprise private network, a virtual private network, or a combination of any of these. The example network system of figure 1 is a simplified illustration depicting two user devices 11, 12 and one server 13. The number of the user devices 11, 12 and servers 13 may vary.

Arrows between the elements in Figure 1 illustrate possible connectivity of the elements. Any of the user device 11, 12 and server 13 may be connected to the network 10, which allow them to exchange messages between them.

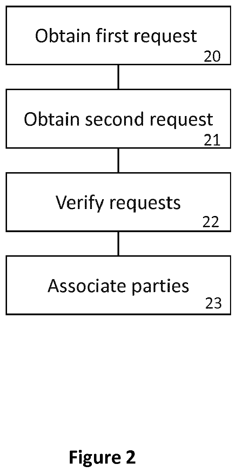

Figure 2 illustrates a simplified flow cart of an example embodiment. In step 20 a first association request message is obtained from a first actor. In step 20 a second association request message is obtained from a second actor. In step 22 the first association message and the second association message are verified. In step 23 the first actor and the second actor are associated with each other.

Looking at the method illustrated in Figure 2 closer. The two actors may represent two users who wish to get associated in a social network. In the social network the users may be identified with unique identifiers like a username, a nickname, an alias etc. or the users are identified with a running number or a random string of numbers and/or letters, symbols, character etc. The social network is planned such that only people who know each other can be connected and association request messages from strangers are not shown to the users. The two users know each other and would like to get connected in the social network. They may agree to get associated using a second communications channel, for example a phone call, an e-mail or when they meet face-to-face and share their unique identifiers and agree to send association request messages to the social network.

The association request messages are obtained (steps 20 and 21) at the social network and the association request messages are verified (step 22). Now the users may be associated (step 23) and the users may start using the social network together - associated to each other. This step (step 23) may comprise further actions like approval from at least one other user, administrator etc. One of the benefits of the current invention is that the association request messages are not shown to the users or the association request messages are shown only if both the first and the second users have sent the association request messages.

Obtaining the first association request message in step 20 may start a waiting period for waiting the second association request message step 21. The second association request message has to be received within the waiting period.

The example above is a simplified embodiment. There can be for example a group or groups of users associated and rules for associating a new user may vary. For example, as a response from a new user joining a group, the association of the new user may require obtaining an association request message from an administrator of the social network or a group, one or more members of the group etc. There may be other requirements and verifications during the procedure. The associating request messages may be obtained at a server running the social network, when the messages are shown to the users when they login to the chat room next time or the associating request messages may be obtain

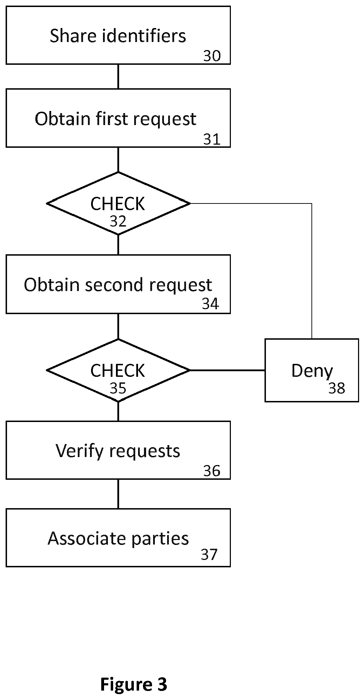

Figure 3 illustrates another simplified flowchart of an example embodiment. Two actors may represent for example two users who wish to get associated in a social network, like a chat room, a multiplayer game etc. In step 30 the two users share their unique identifiers using the second communications channel, for example verbally when they meet, in a telephone call, via e-mail etc. In step 31 a first association request message is sent by the first user and obtained for example at a server running the social network, the first association request message containing at least the unique identifier of the second user. The first user may send the first association request message for example when logged in to the social network using. The social network may have a functionality for inviting users to invite other users to associate with.

In step 32 certain requirements may be checked relating to the first association request. If the requirements are not met, processing the first association request message may be postponed or denied, step 38. The requirements may for example define the waiting period within which the second association request has to be obtained. Step 32 may further include checking if the second user has already sent an associating request message inviting the first user to associate with. In step 34 a second association request message is sent by the second user and obtained for example at the server running the social network, the second association request message containing at least the unique identifier of the first user. The second user may send the second association request message for example when logged in to the social network using. The social network may have a functionality for inviting users to invite other users to associate with.

In step 35 certain requirements may be checked relating to the second association request. If the requirements are not met, processing the first association request message may be denied, step 38. The requirements may for example define a waiting period within which the second association request has to be obtained. In step 36 the first association request message and the second association request messages are verified. The verification may be conducted at the server automatically. The verification in step 36 may further include relaying and requesting a response to the association request messages or information relating to those from the users, an administrator or another person or group of persons etc. In step 37 the first actor and the second actors are associated and the first user and the second user may interact in the social network.

The requirements checked in steps 32 and 35 may include the waiting period between the first and the second association request messages, user settings for ability or permission to associate with another user, requesting an approval from a third party. The third party may be for example a third user, a group of users, an administrator, an automated approval service etc.

Let us consider a use case example of the method illustrated in Figure 3. The two actors represent two users who wish to get associated in a social network, like a multiplayer game. In the multiplayer game the users may be identified with unique identifiers like a username, a nickname, an alias etc. or the users are shown with a running number or a random string of numbers and/or letters etc. The multiplayer game is planned such that only people who know each other can be connected and requests from strangers are not relayed. The two users know each other and would like to get connected in the multiplayer game. They may agree to get associated using a different communications channel, for example a phone call, an e-mail or when they meet face-to-face and share their unique identifiers and agree to send association request messages to the multiplayer game.

The users meet and decide to get associated in the multiplayer game. They share their unique identifiers (step 30) and agree time when to send the association request messages. The multiplayer game may have requirements for associating the users. The requirements (steps 32 and 35) may include for example: the association request messages are sent within one hour, the association request messages have to be approved by another user for example a parent of at least one of the two users etc.

Using the first communication channel, the first user sends the first association requests message and the second user sends the second association requests message and the association request messages are obtained (steps 31 and 34) at the multiplayer game. The association request messages are relayed to the users (step 36). Now the users are associated (step 37) and the users may start using the multiplayer game together. One of the benefits of the current invention is that the association request messages are not shown to the users or the association request messages are shown only if both the first and the second users have sent the association request messages.

The multiplayer game is a simplified example and there can be for example a group of users associated and rules for associating a new user may vary. For example, as a response from a new user joining a multiplayer game, the association of the new user may require obtaining an association request message from an administrator of the multiplayer game or a group, one or more members of the group etc. There may be other requirements and verifications during the procedure.

The multiplayer game may be a game environment, where more than one associated users can play in cooperation to achieve a common goal or the users may play against each other as rivals. In addition to the actual gaming the users may interact also interact using messages sharing pictures etc. Some games are designed for minors and adding the interaction the game may become more exciting, entertaining, social and educating to minors. According to some embodiments of the current invention harassment focusing on minors can be prevented.

Going back to the multiplayer example the two users may be for example children from same school, let's say Mike and Jane. At school they talk about a Cool Game they both play and they would like to be "friends" (associated) in the Cool Game in order to play together. They share their usernames for "friending": Mike's username is *MikeTheChamp* and Jane's username is *J9018.* Later in the evening they both launch and login to the Cool Game. Mike sends an association request message for "friending" with *J9018* using "friending" functionality in the Cool Game, the association request message comprising username *MikeTheChamp.*

At this point Jane does not receive any indication about the "friending" message from Mike. Next Jane sends an association request message for "friending" with *MikeTheChamp* using "friending" functionality in the Cool Game, the association request message comprising username *MikeTheChamp.* As a response of receiving the two association request messages from the two users requesting friending them, the "friending" functionality associates Mike and Jane and they may start to play together and interact in the Cool Game.

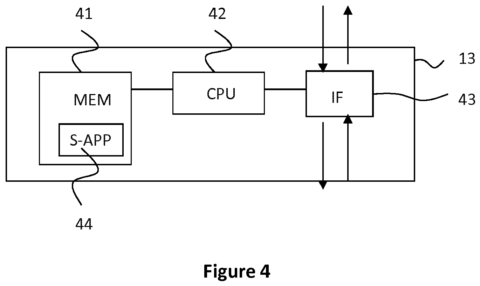

Figure 4 illustrates a simplified block diagram of an example server 13. The server 13 may be a physical or virtual computational entity capable of enhancing information and to perform computational tasks. The server 13 may be arranged to respond to requests across an example network to provide, or help to provide service. The server 13 may act on client-server architecture serving requests of at least one user device 11, 12 or at least one application running on the at least one user device 11, 12. The server 13 may refer to one entity or a group on entities configured to operate jointly. In an example embodiment the server 13 may be a server device comprising a memory 41 (MEM) for storing a server application 44 (S-APP). The memory 41 may comprise volatile or non-volatile memory, for example EEPROM, ROM, PROM, RAM, DRAM, SRAM, firmware, programmable logic, etc. The server 13 may further comprise one or more processor units 42 (CPU) for processing instructions and running computer programs, like the server application 44 and an interface unit 43 (IF) for sending and receiving messages.

The server application 44 may comprise software for running a social network service, like a chat room, a multiplayer game etc. The server application may further comprise functionality to coordinate associating actors, users, group of users, groups of users to enable for example interaction between those.

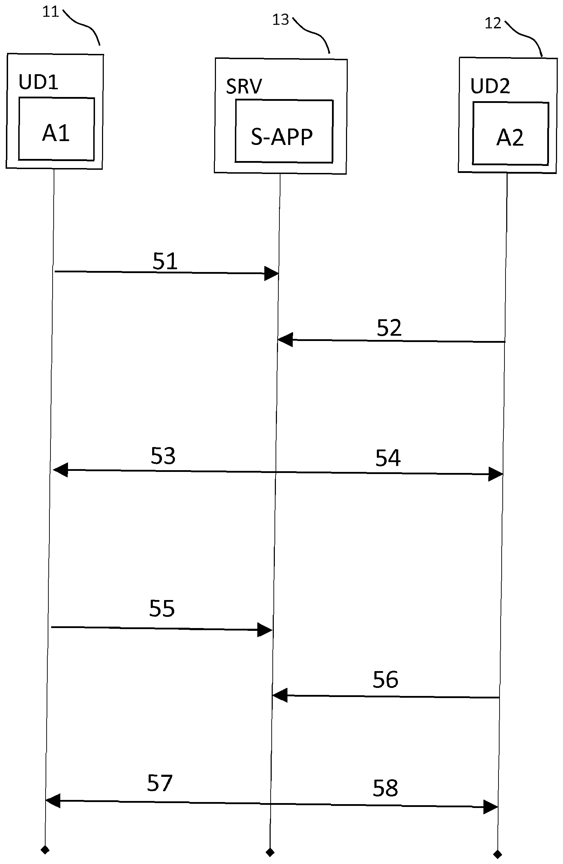

Figure 5 illustrates a simplified example embodiment of a signaling chart. Two user devices 11, 12 and one server 13 are depicted. User devices 11, 12 may comprise an application, a client, an internet browser application or other suitable means for managing actors (A1 and A2) and connecting to the server application (S-APP). A first association request message, 51 is sent from the user device 11 to the server 13.

The first association request message, 51 may comprise a first unique identifier identifying the user of the user device 11, a second unique identifier identifying the user of the user device 12, request for association and other information.

The second association request message, 52 may comprise a first unique identifier identifying the user of the user device 11, a second unique identifier identifying the user of the user device 12, request for association and other information.

According to an example embodiment as a response to the second association request message the actors (A1 and A2) are associated.

According to another example embodiment messages 53 and 54 are further sent from the server 13 to the user devices 11 and 12. The sent messages may contain same information as the association request messages 51 and 52 or they may contain other information indicating the association requests. The messages 53 and 54 may be visible to the users or they may be invisible for example automatically updating actors (A1 and A2) associating the actors.

According to another example embodiment messages 55 and 56 are further sent form the user devices 11 and 12 to the server 13 indicating acknowledgements of the associations by the users. Sending the messages 55 and 56 may require action from the users or they may be sent automatically to associate the actors.

According to another example embodiment messages 57 and 58 are further sent from the server 13 indicating a successful association.

According to an example embodiment if the server 13 fails to receive the association request message 52 - it is not sent or it is not received at the server 13 - the first association request message is ignored and the association request is denied.

While various aspects of the invention have been illustrated and described as block diagrams, message flow diagrams, flow charts and logic flow diagrams, or using some other pictorial representation, it is well understood that the illustrated units, blocks, device, system elements, procedures and methods may be implemented in, for example, hardware, software, firmware, special purpose circuits or logic, a computing device or some combination thereof.

It is apparent to a person skilled in the art that as technology advances, the basic idea of the invention can be implemented in various ways. The invention and its embodiments are therefore not restricted to the above examples, but they may vary within the scope of the claims.

## Claims

1. A method for associating actors in a social network comprising:
- obtaining a first association request message from a first actor, the first association request message comprising information identifying a first actor and a second actor;
**characterized by**
- not providing any indication about the first association request message to the second actor in response to obtaining the first association request message;
- defining and starting a waiting period in response to obtaining the first association request message;
- waiting for a second association request message from the second actor, the second association request message comprising information identifying the first actor and the second actor;
- if the second association request message is obtained during the waiting period, associating the first actor with the second actor as a response to obtaining the second association request message; and
- if the second association request message is not obtained during the waiting period, ignoring the first association request message and denying the association request.

2. The method of claim 1, further comprising:
- as response to obtaining the second association request showing the first request message to the second actor and showing the second request message to the first actor.

3. The method according to claim 1, wherein
- failing to obtain the second association request message within the waiting period results in denying the first association request message.

4. The method according to claim 1, wherein the first actor and the second actor are connected with a first communications channel.

5. The method according to claim 1, wherein the first actor comprises a first unique identifier and the second actor comprises a second unique identifier.

6. The method according to claim 1, wherein the first unique identifier and the second unique identifier are invisible to the actors.

7. A method according to claims 3 to 5, wherein the first actor and the second actor share the first unique identifier and the second unique identifiers using a second communications channel.

8. A method according to claim 1 further comprising sending at least one of the first association request message or the second association request message to a third actor.

9. A method according to claim 8, wherein an approval message for at least one of the first association request message or the second association request message is obtained from the third actor.

10. A computer program product for associating actors in a social network including one or more sequences of one or more instructions which, when executed by one or more processors, cause an apparatus to at least perform the steps of at least:
- obtaining a first association request message from a first actor, the first association request message comprising information identifying a first actor and a second actor;
**characterized by**:
- not providing any indication about the first association request message to the second actor in response to obtaining the first association request message;
- defining and starting a waiting period in response to obtaining the first association request message;
- waiting for a second association request message from a second actor, the second association request message comprising information identifying the first actor and the second actor; and
- if the second association request message is obtained during the waiting period, associating the first actor with the second actor as a response to obtaining the second association request message; and
- if the second association request message is not obtained during the waiting period, ignoring the first association request message and denying the association request.

11. A computer program product cause the apparatus to further perform any of the steps defined in claims 1 to 9.

12. A server for associating actors in a social network comprising:
- means for obtaining a first association request message from a first actor, the first association request message comprising information identifying to a first actor and a second actor;
**characterized by**:
- means for not providing any indication about the first association request message to the second actor in response to obtaining the first association request message;
- means for defining and starting a waiting period in response to obtaining the first association request message;
- means for waiting for a second association request message from a second actor, the second association request message comprising information identifying the first actor and the second actor; and
- means for associating, if the second association request message is obtained during the waiting period, the first actor with the second actor as a response to obtaining the second association request message; and
- means for ignoring, if the second association request message is not obtained during the waiting period, the first association request message and for denying the association request.

## Patentansprüche

1. Verfahren zur Assoziierung von Akteuren in einem sozialen Netzwerk, umfassend:
- Erhalten einer ersten Assoziierungsanfragenachricht von einem ersten Akteur, wobei die erste Assoziierungsanfragenachricht Informationen umfasst, die einen ersten Akteur und einen zweiten Akteur identifizieren;
**gekennzeichnet durch**
- Nichtbereitstellen einer Anzeige über die erste Assoziierungsanfragenachricht beim zweiten Akteur in Reaktion auf den Erhalt der ersten Assoziierungsanfragenachricht;
- Festlegen und Starten einer Wartezeit in Reaktion auf den Erhalt der ersten Assoziierungsanfragenachricht;
- Warten auf eine zweite Assoziierungsanfragenachricht vom zweiten Akteur, wobei die zweite Assoziierungsanfragenachricht Informationen umfasst, die den ersten Akteur und den zweiten Akteur identifizieren;
- falls die zweite Assoziierungsanfragenachricht während der Wartezeit erhalten wird, Assoziieren des ersten Akteurs mit dem zweiten Akteur als Reaktion auf den Erhalt der zweiten Assoziierungsanfragenachricht; und
- falls die zweite Assoziierungsanfragenachricht nicht während der Wartezeit erhalten wird, Ignorieren der ersten Assoziierungsanfragenachricht und Verneinen der Assoziierungsanfrage.

2. Verfahren nach Anspruch 1, ferner umfassend:
- als Reaktion auf den Erhalt der zweiten Assoziierungsanfrage, Anzeigen der ersten Anfragenachricht beim zweiten Akteur und Anzeigen der zweiten Anfragenachricht beim ersten Akteur.

3. Verfahren nach Anspruch 1, wobei
- das Nichterhalten der zweiten Assoziierungsanfragenachricht innerhalb der Wartezeit zur Verneinung der ersten Assoziierungsanfragenachricht führt.

4. Verfahren nach Anspruch 1, wobei der erste Akteur und der zweite Akteur mit einem ersten Kommunikationskanal verbunden sind.

5. Verfahren nach Anspruch 1, wobei der erste Akteur eine erste einheitliche Identifikationskennung aufweist und der zweite Akteur eine zweite einheitliche Identifikationskennung aufweist.

6. Verfahren nach Anspruch 1, wobei die erste einheitliche Identifikationskennung und die zweite einheitliche Identifikationskennung für die Akteure unsichtbar sind.

7. Verfahren nach Anspruch 3 bis 5, wobei der erste Akteur und der zweite Akteur die erste einheitliche Identifikationskennung und die zweite einheitliche Identifikationskennung über einen zweiten Kommunikationskanal miteinander teilen.

8. Verfahren nach Anspruch 1, ferner umfassend: Senden von mindestens einer der ersten Assoziierungsanfragenachricht oder zweiten Assoziierungsanfragenachricht an einen dritten Akteur.

9. Verfahren nach Anspruch 8, wobei eine Genehmigungsnachricht vom dritten Akteur für mindestens eine der ersten Assoziierungsanfragenachricht oder zweiten Assoziierungsanfragenachricht erhalten wird.

10. Computerprogrammprodukt zur Assoziierung von Akteuren in einem sozialen Netzwerk, umfassend eine oder mehrere Folgen einer oder mehreren Anweisungen, die bei Ausführung durch einen oder mehrere Prozessoren bewirken, dass eine Vorrichtung mindestens die Schritte ausführt:
- Erhalten einer ersten Assoziierungsanfragenachricht von einem ersten Akteur, wobei die erste Assoziierungsanfragenachricht Informationen umfasst, die einen ersten Akteur und einen zweiten Akteur identifizieren;
**gekennzeichnet durch**:
- Nichtbereitstellen einer Anzeige über die erste Assoziierungsanfragenachricht beim zweiten Akteur in Reaktion auf den Erhalt der ersten Assoziierungsanfragenachricht;
- Festlegen und Starten einer Wartezeit in Reaktion auf den Erhalt der ersten Assoziierungsanfragenachricht;
- Warten auf eine zweite Assoziierungsanfragenachricht von einem zweiten Akteur, wobei die zweite Assoziierungsanfragenachricht Informationen umfasst, die den ersten Akteur und den zweiten Akteur identifizieren; und
- falls die zweite Assoziierungsanfragenachricht während der Wartezeit erhalten wird, Assoziieren des ersten Akteurs mit dem zweiten Akteur als Reaktion auf den Erhalt der zweiten Assoziierungsanfragenachricht; und
- falls die zweite Assoziierungsanfragenachricht nicht während der Wartezeit erhalten wird, Ignorieren der ersten Assoziierungsanfragenachricht und Verneinen der Assoziierungsanfrage.

11. Computerprogrammprodukt, welches bewirkt, dass die Vorrichtung ferner einen der Schritte nach Anspruch 1 bis 9 ausführt.

12. Server zur Assoziierung von Akteuren in einem sozialen Netzwerk, umfassend:
- Mittel zum Erhalten einer ersten Assoziierungsanfragenachricht von einem ersten Akteur, wobei die erste Assoziierungsanfragenachricht Informationen umfasst, die einen ersten Akteur und einen zweiten Akteur identifizieren;
**gekennzeichnet durch**:
- Mittel zum Nichtbereitstellen einer Anzeige über die erste Assoziierungsanfragenachricht beim zweiten Akteur in Reaktion auf den Erhalt der ersten Assoziierungsanfragenachricht;
- Mittel zum Festlegen und Starten einer Wartezeit in Reaktion auf den Erhalt der ersten Assoziierungsanfragenachricht;
- Mittel zum Warten auf eine zweite Assoziierungsanfragenachricht von einem zweiten Akteur, wobei die zweite Assoziierungsanfragenachricht Informationen umfasst, die den ersten Akteur und den zweiten Akteur identifizieren; und
- Mittel zum Assoziieren des ersten Akteurs mit dem zweiten Akteur als Reaktion auf den Erhalt der zweiten Assoziierungsanfragenachricht, falls die zweite Assoziierungsanfragenachricht während der Wartezeit erhalten wird; und
- Mittel zum Ignorieren der ersten Assoziierungsanfragenachricht und Verneinen der Assoziierungsanfrage, falls die zweite Assoziierungsanfragenachricht nicht während der Wartezeit erhalten wird.

## Revendications

1. Procédé d'association d'acteurs dans un réseau social, comprenant :
- obtenir un premier message de demande d'association venant d'un premier acteur, ledit premier message de demande d'association comprenant des informations identifiant un premier acteur et un deuxième acteur;
**caractérisé par**
- ne pas remettre au deuxième acteur une indication sur le premier message de demande d'association en réponse à l'obtention du premier message de demande d'association;
- définir et démarrer une période d'attente en réponse à l'obtention du premier message de demande d'association;
- attendre un deuxième message de demande d'association du deuxième acteur, ledit deuxième message de demande d'association comprenant des informations identifiant le premier acteur et le deuxième acteur;
- si le deuxième message de demande d'association est obtenu pendant la période d'attente, associer le premier acteur avec le deuxième acteur en tant que réponse à l'obtention du deuxième message de demande d'association; et
- si le deuxième message de demande d'association n'est pas obtenu pendant la période d'attente, ignorer le premier message de demande d'association et nier la demande d'association.

2. Procédé selon la revendication 1, comprenant également :
- en tant que réponse à l'obtention du deuxième message de demande d'association, montrer au deuxième acteur le premier message de demande et montrer au premier acteur le deuxième message de demande.

3. Procédé selon la revendication 1, dans lequel
- la non-obtention du deuxième message de demande d'association pendant la période d'attente résulte en la négation du premier message de demande d'association.

4. Procédé selon la revendication 1, dans lequel le premier acteur et le deuxième acteur sont reliés avec un premier canal de communication.

5. Procédé selon la revendication 1, dans lequel le premier acteur comprend un premier identifiant unique et le deuxième acteur comprend un deuxième identifiant unique.

6. Procédé selon la revendication 1, dans lequel le premier identifiant unique et le deuxième identifiant unique sont invisibles aux acteurs.

7. Procédé selon la revendication 3 ou 5, dans lequel le premier acteur et le deuxième acteur partagent le premier identifiant unique et le deuxième identifiant unique par un deuxième canal de communication.

8. Procédé selon la revendication 1, comprenant également : envoyer à un troisième acteur au moins l'un parmi le premier message de demande d'association ou le deuxième message de demande d'association.

9. Procédé selon la revendication 8, dans lequel un message d'autorisation venant du troisième acteur pour au moins l'un parmi le premier message de demande d'association ou le message de demande d'association est obtenu.

10. Produit programme d'ordinateur pour l'association d'acteurs dans un réseau social, comprenant : une ou plusieurs séquences d'une ou de plusieurs instructions qui, lorsqu'elles sont exécutées par un ou plusieurs processeurs, amènent un dispositif à exécuter les étapes consistant au moins à :
- obtenir un premier message de demande d'association venant d'un premier acteur, ledit premier message de demande d'association comprenant des informations identifiant un premier acteur et un deuxième acteur;
**caractérisé par** :
- ne pas remettre au deuxième acteur une indication sur le premier message de demande d'association en réponse à l'obtention du premier message de demande d'association;
- définir et démarrer une période d'attente en réponse à l'obtention du premier message de demande d'association;
- attendre un deuxième message de demande d'association d'un deuxième acteur, ledit deuxième message de demande d'association comprenant des informations identifiant le premier acteur et le deuxième acteur; et
- si le deuxième message de demande d'association est obtenu pendant la période d'attente, associer le premier acteur avec le deuxième acteur en tant que réponse à l'obtention du deuxième message de demande d'association; et
- si le deuxième message de demande d'association n'est pas obtenu pendant la période d'attente, ignorer le premier message de demande d'association et nier la demande d'association.

11. Produit programme d'ordinateur qui amène le dispositif à exécuter également l'une quelconque des étapes selon les revendications 1 à 9.

12. Serveur pour l'association d'acteurs dans un réseau social, comprenant :
- un moyen pour obtenir un premier message de demande d'association d'un premier acteur, ledit premier message de demande d'association comprenant des informations identifiant un premier acteur et un deuxième acteur;
**caractérisé par** :
- un moyen pour ne pas remettre au deuxième acteur une indication sur le premier message de demande d'association en réponse à l'obtention du premier message de demande d'association;
- un moyen pour définir et démarrer une période d'attente en réponse à l'obtention du premier message de demande d'association;
- un moyen pour attendre un deuxième message de demande d'association d'un deuxième acteur, ledit deuxième message de demande d'association comprenant des informations identifiant le premier acteur et le deuxième acteur; et
- un moyen pour associer, si le deuxième message de demande d'association est obtenu pendant la période d'attente, le premier acteur avec le deuxième acteur en tant que réponse à l'obtention du deuxième message de demande d'association; et
- un moyen pour ignorer, si le deuxième message de demande d'association n'est pas obtenu pendant la période d'attente, le premier message de demande d'association et pour nier la demande d'association.
